# EUROPEAN PATENT APPLICATION

(11) **EP 1 510 793 A1**
(43) Date of publication of application: **02.03.2005**
(21) Application number: 03255347.1
(22) Date of filing: 28.08.2003
(51) Int. Cl.: G01F 1/40

(54) **Flow meter**

(30) Priority: 28.08.2003 GB 0219965
(71) Applicant: Thames Water Utilities Limited, Reading, Berkshire RG1 8DB (GB)
(72) Inventor: Woodward, Clive Anthony, Slough Berkshire SL3 7BH (GB)
(74) Representative: Johnson, Terence Leslie

(57) **Abstract**

The invention relates to apparatus wherein an existing valve in a pipeline for carrying fluid such as water e.g. in a water distribution system can be connected, permanently or temporarily, to an electronics unit such that when the electronics unit is connected, the flow direction and flow rate of the water can be determined.

## Description

The invention relates to a flow meter for monitoring flow of a fluid, particularly a liquid such as water, along a pipe, conduit or the like.

When a fluid flows in a pipe, head is generally lost due to friction between the fluid and the pipe wall. This loss of head is approximately proportional to the square of the flow rate. If the head at two points on the pipe can be measured with sufficient accuracy, the flow rate can be inferred. This is often difficult since head losses over short distances tend to be very small, limiting the utility of differential pressure measurements, and measurement of head changes over large distances requires accurate knowledge of the relative elevations of the sensors.

It is also known that when a fluid in a pipe flows past any form of constriction, there is a step in the hydraulic gradient at the point of the constriction. The size of this step is also a function of the flow rate of the fluid, and many designs of flow meter have been produced which rely on measurement of differential pressure across a constriction of known characteristics such as an orifice plate or a venturi.

Moreover, any valve that can be set in a partly open condition can be used to generate a constriction that will generate a head loss which will be a function of both valve position and flow rate. This fact has been used by others who have made tappings on either side of valves that were not designed for this purpose, to allow differential pressure across the valve to be measured. An extensive calibration exercise is then required, using a reference flow meter, to establish relationships between differential pressure, flow rate and valve position for the fluid flowing through the valve.

It is an object of the invention to seek to mitigate these disadvantages.

According to the invention there is provided apparatus for monitoring flow of a fluid through a carrier such as a pipe, pipe-line, conduit or the like for the fluid, comprising a valve and an electronic means for determining flow of fluid past the valve.

Preferably, the electronic means may be connected electronically, permanently or temporarily, with the valve so that the operation of the valve as a valve *per se* is not affected, and the flow direction and flow rate may be determined.

Using the invention it is possible to provide a means of manufacturing a valve such that its subsequent use as a flow measuring device is simplified compared with existing practice. Stated in another way a pipeline valve can be made to function as a flow meter.

According to another aspect of the present invention, there is provided a means of converting a valve for use as a flow meter, comprising:
(a) providing information regarding the optimal placement of tappings for differential pressure measurement;
(b) providing means of determining the current position of the valve mechanism with sufficient accuracy to allow a desired flow measurement accuracy to be achieved; and
(c) providing a calibration surface or a means of calculating the flow rate from the measured differential pressure and valve position information.

For converting a valve for use as a flow meter, there may be modifications to the valve housing to simplify the attachment of a differential pressure measuring device. These modifications may be marking the optimal tapping locations e.g. screw threaded holes into the housing on the valve housing, provision of a removable plug at each optimal tapping location, or provision of a suitably positioned valve or valves which in turn may be capable of accepting a push fit connector such that the or each valve is opened when the connector is in place, and automatically closes when the connector is removed.

Suitably there may be means for determining the current position of the valve mechanism with sufficient accuracy to allow the desired flow measurement accuracy to be achieved.

There may preferably be a calibration surface or a means of calculating the flow rate from the measured differential pressure and valve position information, through or past the valve.

Again a means of converting the valve for use as a flow meter, may comprise one or more of the following:-
(a) provision of a differential pressure sensing elements of or within the valve housing, arranged so as to be capable of measuring the differential pressure across the valve. This pressure sensing element may be provided with a means of being interrogated when required; the element may be remotely positioned with respect to the valve means;
(b) provision of equipment capable of interrogating the differential pressure sensor and making the result available for use in flow calculation. This equipment may incorporate a means of calculating the flow rate, given information on the valve position and valve type;
(c) a means of determining the current position of the valve mechanism, with sufficient accuracy to allow the desired flow measurement accuracy to be achieved; and
(d) a calibration surface or a means of calculating the flow rate from the measured differential pressure and valve position information.

In a preferred embodiment, apparatus including a valve is provided which has a primary function of restricting or preventing the flow of fluid through a pipe when required so to do (but not at other times), which has been adapted to facilitate the measurement of the differential pressure across a flow restricting element of the apparatus. The apparatus may also be adapted to improve the accuracy with which the position of the flow restricting element can be determined, and/or the apparatus may be adapted to improve or optimise flow characteristics of the fluid, suitably water, under restricted flow conditions and to optimise the differential pressure measurement system to facilitate the use of the differential pressure measurements in estimating the rate of fluid flow through the apparatus, which may be provided with calibration data to allow the flow rate of the fluid in question to be calculated from the differential pressure and flow restricting element position measurements.

The valve may comprise any kind of valve that is capable of partly restricting the flow of fluid through it.

Whenever it is desirable to know the status of the valve, or to know the rate of fluid flow through the apparatus, it is possible to measure the differential pressure across the flow restricting element of the valve. If the position of the flow restricting element of the valve is known, and the relationship between differential pressure and flow rate is known for that position and for the relevant fluid, the flow rate and the direction of flow can be determined. If the position of the flow restricting element of the valve is such that the relationship between differential pressure and flow rate is not known (the restriction is too great or too small) the valve can be moved to a more suitable position.

In every embodiment, the differential pressure across the flow restricting element of the valve can serve as a guide to how fast the valve can be moved with safety. (As a general rule, the higher the differential pressure, the more slowly the valve must be moved. The actual safe rates of movement for any particular differential pressure are dependant on the length of pipe involved and the nature of the fluid contained therein. Where there is a need to restrict the rate of movement of a valve in order to eliminate the risk of harmful pressure surges, this feature of apparatus embodying the invention can be valuable).

Thus using the invention, it is possible to provide apparatus in which a valve with a flow restricting element is used to measure flow, i.e. to act as a flow meter, particularly when there may be cost or space constraints, preventing installation of a separate valve and flow meter, but more often, the reason is that a need has arisen to measure flow at a location where this need had not been foreseen at the design stage of an installation. Modification of an existing valve may be the most cost effective option but only if the valve is accessible and it is possible to fit a reference flow meter in line with the valve for calibration purposes.

There are many examples of situations where it would be advantageous to know the differential pressure across and the flow rate of water through a valve in a water distribution system.

Some of the benefits of knowing the rate of flow of water through a valve in a water distribution system are:
(i) If the rate of flow of water in a pipe is forced to change rapidly, a pressure surge is generated as the inertia of the water is increased or reduced. Where a large mass of water is involved (e.g. in long or large diameter pipes) the pressure surge can be very large and can lead to the danger of structural damage to the pipe network. If rate of change of flow is not known, certain throttle valves must be operated very slowly to ensure that they do not cause an excessive rate of change in flow rate. If the flow through the valve could be measured by the operator, significant amounts of time could be saved.
(ii) At present leak detection and pinpointing techniques are not able to distinguish between large leaks and small leaks. They may be targeted on metered areas with unexpectedly high levels of consumption, but within such an area it is common to find that one large leak accounts for the vast majority of the water loss, with many other small leaks, that are not economic to repair, having been repaired anyway because their size could not be determined in advance.
(iii) Isolating lengths of main in turn and monitoring the changes in the total amount of water entering the metered area can allow lengths of main with very large leaks to be identified, but if it were possible to measure the flow into each length of main by simply closing all possible feeds except one and then measuring the flow in through the one remaining valve, this would result in much increased confidence in the results, it would be much quicker and it would not cause inconvenience to customers.

It will be understood that the above benefits are achievable using apparatus embodying the invention, and also that the invention extends to retro-fittings i.e. to modification of an existing valve to provide flow data.

## Claims

1. Apparatus for monitoring flow of a fluid through a carrier, **characterised by**
a valve means, by a flow restricting element of the valve means and by an electronic means for determining flow of fluid past said flow restricting element, whereby fluid flow direction and flow rate is determinable.

2. Apparatus according to Claim 1, **characterised by** the valve means being retro-fitted to the carrier.

3. Apparatus according to Claim 1 or Claim 2, for converting the valve means for use as a flow meter for fluid, **characterised by** a valve housing, by a valve mechanism of said valve housing, by means for providing information relating to optimal placement for differential pressure measurement across the valve housing, by means adapted to provide current position of said valve mechanism and by means adapted to calculate flow rate from said measured differential pressure means and said valve position information means.

4. Apparatus according to Claim 3, **characterised by** the means adapted to calculate flow rate comprising a calibration surface means.

5. Apparatus according to Claim 3 or Claim 4, **characterised by** the optimal placement comprising optimal tapping locations on said valve housing.

6. Apparatus according to Claim 5, **characterised by** a removable plug at each optimal tapping location.

7. Apparatus according to any of Claims 3 to 6, **characterised by** the valve means comprising a valve and a push-fit connector, and by the valve being openable when the connector is connected therewith, and automatically closable when said connector is removed.

8. Apparatus according to any of Claims 3 to 7, **characterised by** means for determining a current position of the valve mechanism whereby to provide measurement of fluid flow.

9. Apparatus according to any of Claims 3 to 8, **characterised by** a differential pressure sensing element of the valve housing, and by the element being adapted to measure differential pressure across the valve means.

10. Apparatus according to Claim 9, **characterised by** electronic means for interrogating the pressure sensing element.

11. Apparatus according to Claim 10, **characterised by** the interrogating means being positioned remotely from the valve means.

12. Apparatus according to any of Claims 3 to 11, **characterised by** means adapted to determine a current position of the valve mechanism.

13. Apparatus according to any of Claims 3 to 12, **characterised by** an element comprising a calibration surface and/or a means of calculating a flow rate from a measured differential pressure across the valve and position of the valve.

14. A water distribution system, **characterised by** being incorporated with apparatus according to any preceding claim.
